**Europäisches Patentamt**

**European Patent Office**

**Office européen des brevets**

(19)

(11)　**EP 1 079 219 A2**

(12)　**EUROPÄISCHE PATENTANMELDUNG**

(43) Veröffentlichungstag:
　　 28.02.2001　Patentblatt 2001/09

(51) Int. Cl.$^7$: **G01K 13/02**

(21) Anmeldenummer: **00117774.0**

(22) Anmeldetag: **18.08.2000**

(84) Benannte Vertragsstaaten:
　　 **AT BE CH CY DE DK ES FI FR GB GR IE IT LI LU MC NL PT SE**
　　 Benannte Erstreckungsstaaten:
　　 **AL LT LV MK RO SI**

(30) Priorität: **21.08.1999 DE 19939757**

(71) Anmelder:
　　 **Temperaturmesstechnik Geraberg GmbH**
　　 **98693 Martinroda (DE)**

(72) Erfinder:
　　 • **Irrgang,Klaus,Dr.**
　　　 **98716 Geraberg (DE)**

　　 • **Schätzler,Klaus Dieter**
　　　 **98716 Geraberg (DE)**
　　 • **Heinz,Winfried**
　　　 **98716 Elgersburg (DE)**
　　 • **Kämpf,Hartmuth**
　　　 **98716 Elgersburg (DE)**
　　 • **Schultheis,Peter,Dr.**
　　　 **98693 Manebach (DE)**
　　 • **Bernhard,Frank,Doz.Dr.-Ing.**
　　　 **98693 Ilmenau (DE)**

(74) Vertreter: **Liedtke, Klaus, Dr.**
　　　 **Elisabethstrasse 10**
　　　 **99096 Erfurt (DE)**

(54)　**Verfahren und Temperaturfühler zur Medientemperaturerfassung**

(57)　Der Erfindung liegt die Aufgabe zugrunde, ein Verfahren und einen Temperaturfühler der eingangs genannten Art anzugeben, mit denen es möglich ist, den Einbaufehler in weiten Grenzen automatisch und unabhängig von den jeweils bestehenden Wärmeübergangsverhältnissen zu korrigieren.

Erfindungsgemäß gelingt die Lösung der Aufgabe dadurch, daß die Temperatur an mehreren Meßstellen jeweils mit einzelnen Sensoren (10) im Schutzrohr (1) des Thermometers ermittelt wird, wobei die einzelnen Sensoren (10) definierte Wärmeübergangs- und/oder Wärmeleitcharakteristik aufweisen, und die Messwerte einzeln zu einer im Temperaturfühler enthaltenen elektronischen Auswerteeinheit (21) geführt werden, in der aus den einzelnen Meßwerten unter Berücksichtigung der Wärmeübergangs- und/oder Wärmeleitcharakteristik zum Medium (2) der wahre Temperaturwert ermittelt wird und daß in dem elektrischen Anschlußteil (6) eine elektronische Baueinheit (21) angeordnet ist, die einen Mikroprozessor enthält und die mindestens drei Eingänge aufweist, welche jeweils mit einem Sensor (10) verbunden sind und daß mindestens zwei Sensoren so angeordnet sind, daß sich unterschiedliche Wärmeübergangswiderstände zum Prozeßmedium ergeben.

Die Erfindung betrifft ein Verfahren und einen Temperaturfühler zur Medientemperaturerfassung mit Einbautemperaturfühlern, bei dem mit in einem Schutzrohr angeordneten Sensoren die Temperatur gemessen und die zugehörigen Meßwertsignale über ein elektrisches Anschlußteil nach außen geführt werden.

Figur 2

**Beschreibung**

Die Erfindung betrifft ein Verfahren und einen Temperaturfühler zur Medientemperaturerfassung mit Einbautemperaturfühlern, bei dem mit in einem Schutzrohr angeordneten Sensoren die Temperatur gemessen und die zugehörigen Meßwertsignale über ein elektrisches Anschlußteil nach außen geführt werden.

Berührungsthermometer weisen einen sogenannten Einbaufehler auf, da bei der Temperaturmessung der Meßstelle Wärme entzogen wird und der abfließenden Wärmestrom zu einer fehlerhaften Anzeige führt.

Bedingt durch ihre metallischen Schutzrohre, insbesondere durch die im allgemeinen erforderlichen dickwandigen Zusatzschutzrohre, ist der Einbaufehler mit elektrischen Berührungsthermometern bei Lufttemperaturmessungen besonders hoch.

In Linneweg: Handbuch der Temperaturmessung; VDI/VDE Richtlinie: Technische Temperaturmessung Nr. 3511/Kapitel 3 sind mathematische Berechnungsverfahren angegeben, die eine rechnerische Ermittlung des Meßfehlers ermöglichen. Die Ermittlung des fehlerfreien Meßwertes mit Hilfe dieser Gleichung erfordert jedoch aufwendige Berechnungen und die Kennnisse eine Vielzahl von Parametern, welche die Fehler beeinflussen. Hierzu gehören beispielsweise geometrische Abmessungen und physikalische Kennwerte der Meßanordnung, Strömungsgescwinddigkeit, Strahlungskennwerte und Umgebungstemperatur des Mediums sowie Einflüsse infolge des sogenannten Recovery-Effektes.

Die bekannten theoretischen Modelle sind für den industriellen Einsatz von Meßfühlern wenig geeignet, da sie aufwendige Berechnungen erfordern und immer nur für einen bestimmten Applikationsfall gültig sind.

Außerdem können sich in einem thermisch zu kontrollierenden Prozeß Aggregatzustände bzw. Dichte, Fließgeschwindigkeit und Druck verändern, was auch eine Änderung des Warmeübergangswertes $\alpha$ bewirkt und dadurch weitere, in den Berechnungen nicht berücksichtigte Fehler verursacht.

Neben der theoretischen Fehlerermittlung wurde auch versucht, durch geeignete konstruktive Maßnahmen den statisch-thermischen Fehler des Thermometers zu verringern. Hierzu sind verschiedene Lösungen bekannt.

So ist z.B. in DE 43 44 174 C 2 ein Temperaturfühler beschrieben, bei dem mit Hilfe einer Glaseinschmelzung der Wärmeabfluß zur Thermometerwurzel vermindert wird, so daß eine thermische Entkopplung des Sensors von der Meßstelle erfolgt und der Wärmeableitfluß nach außen gemindert wird.

Weiterhin sind verschiedene Maßnahmen zur Verbesserung des statisch-thermisehen Fehlers angegeben worden, die eine bessere Ankopplung des Temperaturfühlers an das Medium erreichen sollen.

Hierzu gehören z. B. die in DE - PS 8 59 066, DE 17 73 549 B 2 und DE 41 23 093 A 1 beschriebenen Anordnungen.

Es sind weiterhin nach DE 43 15 336 A 1, DE 196 24 078 A 1, DE 40 30 926 C 1 und DE 42 06 540 A 1 Temperaturfühler und Temperaturmeßverfahren bekannt, die im online-Betrieb Messungen und Korrekturen gleichzeitig vornehmen.

Im Stand der Technik sind ferner sogenannte Stufentemperaturfühler bekannt, die mit der Anordnung mehrerer Sensoren in einer Meßanordnung Temperaturprofile in Tankanlagen, Schmelzöfen und anderen Einrichtungen ermitteln. Derartige Meßanordnungen sind beispielsweise in DD 248 945, DE 19 28 804 A1, DE 195 44 880 A1 sowie in AT 2 57 982 beschrieben.

Bei allen diesen Anordnungen ist nachteilig, daß eine Korrektur der Einbaufehler, insbesondere des $\alpha$-Wertes, nicht möglich ist. Der Einsatz dieser Einrichtungen führt deshalb zu erheblichen Meßfehlern, wenn in bestimmten Applikationsfällen Änderungen der Einbaulänge, des Wärmeübergangs ($\alpha$-Wert) oder der Umgebungstemperatur auftreten.

Der Erfindung liegt die Aufgabe zugrunde, ein Verfahren und einen Temperaturfühler der eingangs genannten Art anzugeben, mit denen es möglich ist, den Einbaufehler in weiten Grenzen automatisch und unabhängig von den jeweils bestehenden Wärmeübergangsverhältnissen zu korrigieren.

Die Aufgabe wird erfindungsgemäß mit den kennzeichnenden Merkmalen der Patentansprüche 1 und 6 gelöst.

Vorteilhafte Ausgestaltungen sind in den jeweiligen Unteransprüchen angegeben.

Die Erfindung gewährleistet eine automatische Fehlerkorrektur bei der Temperaturmessung mit selbsttätiger Statusermittlung des Meßsystems und automatische Erkennung der am Fühler selbst auftretenden Fehler sowie die Erkennung von Grenzwerten.

Im Folgenden wird die Erfindung anhand von Ausführungsbeispielen näher erläutert.

In der zugehörigen Zeichnung zeigen:

Figur 1 die prinzipielle Anordnung eines Schutzrohres in einer Rohrleitung,

Figur 2 den grundsätzlichen Aufbau eines Einbautemperaturfühlers,

Figur 3 eine Temperaturfühlerausführung mit gestuft angeordneten Sensoren,

Figur 4 eine Temperaturfühlerausführung mit verschiedenartig angeordneten Sensoren,

Figur 5 eine Temperaturfühlerausführung mit einem im Bodenbereich angeordneten Sensortriplet,

Figur 6 die Anordnung eines multiplen Sensorsubstrats in einem Silberrohr,

Figur 7 ein Gestaltungsbeispiel für ein Sensor-Triplet,

Figur 8 ein Gestaltungsbeispiel für ein Sensor-Douplet

Figur 9 eine Sensoranordnung in einem abgesetzten Schutzrohr,

Figur 10 einen Einbautemperaturfühler, bestehend aus einfachen Schutzrohr mit Kabelmeßeinsatz,

Figur 11 einen Einbautemperaturfühler ohne Meßeinsatz, mit einem Sensor im Wurzelbereich bzw. im Bereich des mechanischen Prozeßanschlusses,

Figur 12 einen Multiset-Sensor mit quer angeordnetem Sensor,

Figur 13 einen Multiset-Sensor mit thermischer Ankopplung durch Silberleitdraht,

Figur 14 einen Multiset-Sensor mit einseitigem Mehrleiteranschluß und keramischer Zugentlastung,
und

Figur 15 einen Multiset-Sensor in mehrlagiger Sensoranordnung.

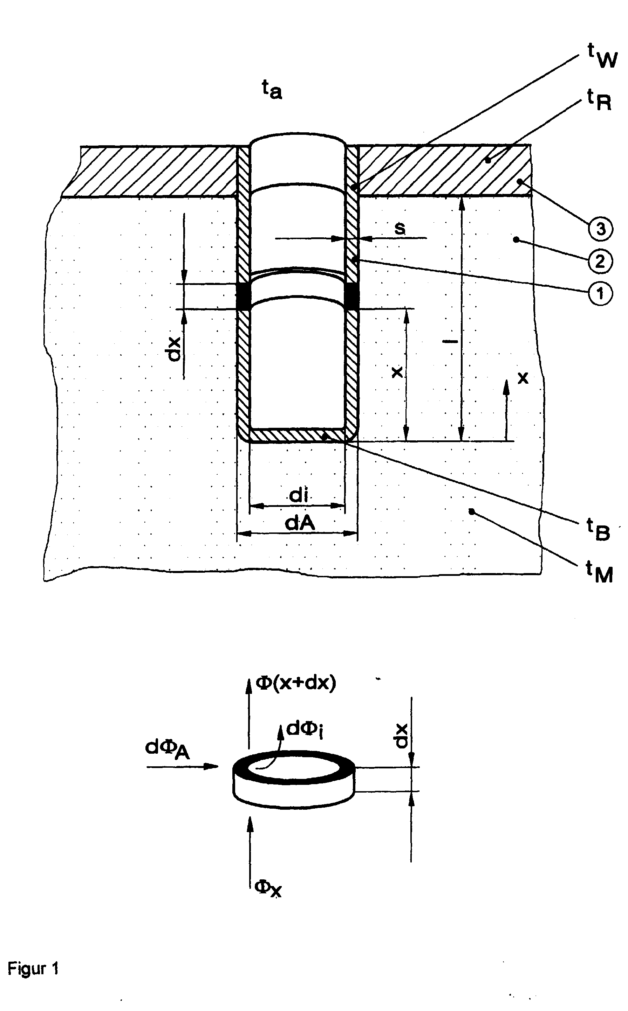

Figur 1 erläutert die für die Temperaturmessung relevanten thermischen Verhältnisse bei der Anordnung eines Schutzrohres in einer Rohrleitung.

Das Schutzrohr 1 der Länge 1 mit der Wandstärke s und dem Außendurchmesser $d_A$ sowie dem Innendurchmesser $d_i$ ist senkrecht an der Rohrleitung 3 angebracht und ragt in das Medium 2 hinein. Im Medium 2 herrscht die Mediumtemperatur $t_M$, außerhalb der Rohrleitung 3 die Außentemperatur $t_a$. In der Rohrleitung 3 herrscht die Rohrwandtemperatur $t_R$, die an der Verbindungsstelle von Rohrleitung 3 und Schutzrohr 1 die Wurzeltemperatur $t_W$ bedingt. Der Wärmefluß F verläuft vom Medium 2 in das Innere des Schutzrohrs 1, an dem sich die Bodentemperatur $t_B$ und die über die Längenkoordinate x veränderliche Rohrwandtemperatur $t_R$ einstellen.

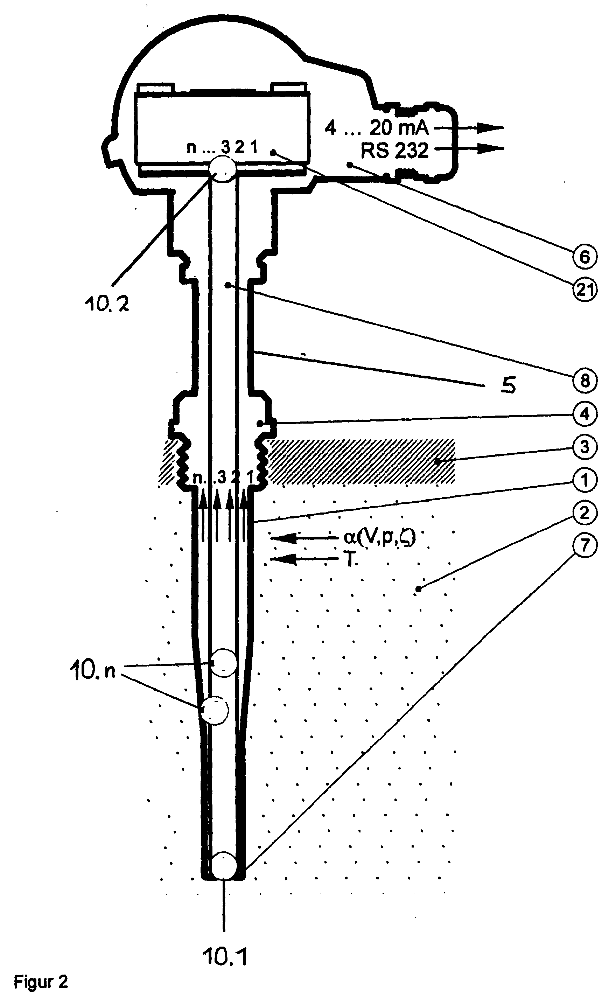

Der grundsätzliche Aufbau eines Einbautemperaturfühlers ist aus Figur 2 ersichtlich. Der Temperaturfühler ist über dem Prozeßanschluß 4 mit der Rohrleitung 3 so verbunden, daß sein Schutzrohr 1 in das Medium 2 hineinragt. Im äußerem Bereich befindet sich der Anschlußkopf 6, zu dem die äußeren Anschlußleitungen geführt werden und der die elektronische Baueinheit 21 enthält. Der Anschlußkopf 6 ist über das Halsrohr 5 mit dem Prozeßanschluß 4 verbunden. Im Inneren des Temperaturfühlers befindet sich der Meßeinsatz 8, bei dem im unteren, vom Schutzrohr 1 umhüllten Bereich mehrere Sensoren 10 angeordnet sind. Davon befindet sich einer am Schutzrohrboden 7.

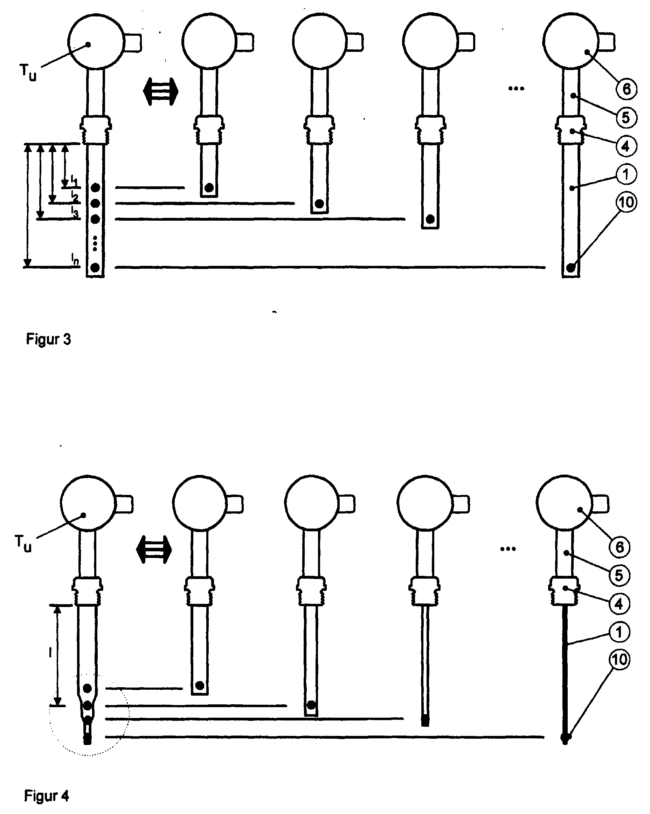

Die Figuren 3 und 4 erläutern verschiedene Anordnungsmöglichkeiten der einzelnen Sensoren im Schutzrohr. Für jeden Sensor ergeben sich im allgemeinen unterschiedliche Wärmeübergangs- und Wärmeableitungsverhältnisse. Die Anzahl der angeordneten Temperatursensoren im Thermometer richtet sich nach dem gewünschten Korrekturumfang. Aufwendige Korrekturen, die eine hohe Genauigkeit ermöglichen, erfordern sechs Meßstellen, während einfache Korrekturen bereits mit drei Meßstellen möglich sind.

In jeder Meßfühlerausführungsform ist einer der Sensoren 10 am Schutzrohrboden angeordnet. Die Konfektionierung dieses Sensors erfolgt dabei so, daß der Wärmeübergang vorwiegend über den Schutzrohrboden 7 erfolgt. Dazu besitzt der innenliegende Meßeinsatz 8 eine Silberleitscheibe, die innen eine entsprechende Form aufweist, so daß der Sensor formschlüssig und wärmeleitgünstig eingebracht werden kann.
Die weiteren Sensoren 10 sind in den Abstanden $l_l$ bis $l_n$ angebracht und können entweder mit einem Silberring am Außenmantel des Meßeinsatzes oder auch ohne einen derartigen Ring angeordnet sein, wobei die einzelnen Meßstellen voneinander entkoppelt sind.

Der jeweilige Meß- bzw. Korrekturwert kann aus den unterschiedlichen Einzelmeßwerten der Sensoren 10.n mit Hilfe verschiedener mathematische Funktionen und Verfahren ermittelt werden. Hierzu ist es möglich, daß die relevanten Temperaturdifferenzen zwischen den einzelnen Meßstellen in einem Codeverfahren in einer Tabelle zusammen gestellt werden oder daß in einem direkten Auswerteverfahren die zum Korrekturwert zugehörigen Temperaturdifferenzen berechnet oder experimentell bestimmt werden.

Für das direkte Auswerteverfahren sind bestimmte konstruktive Vorgaben der Sensorplazierungen erforderlich. Eine bevorzugte Ausführungsform besteht in der Sensoranordnung mit äquidistanten Sensorabständen.

Äquidistante Sensorabstände entstehen z.B. bei der in Figur 3 gezeigten Anordnung. Hierbei sind alle weiteren Sensoren in Rohrabschnitten mit gleichem Durchmesser angeordnet und weisen deshalb gleiche geometrische Bedingungen sowie gleiche Wärmeübergänge und gleiches inneres Leitverhalten (bei entsprechender Anordnung der Innenverbindung) auf.

In dem in Figur 4 dargestellten Beispiel sind die Sensoren in vier unterschiedlichen Zonen positioniert, für die jeweils verschiedene Meßbedingungen gelten. Es bestehen hierbei nicht nur für den Bodensensor, sondern auch für alle weiteren Sensoren unterschiedliche geometrische Bedingungen und damit auch unterschiedliche Warmeübergänge.

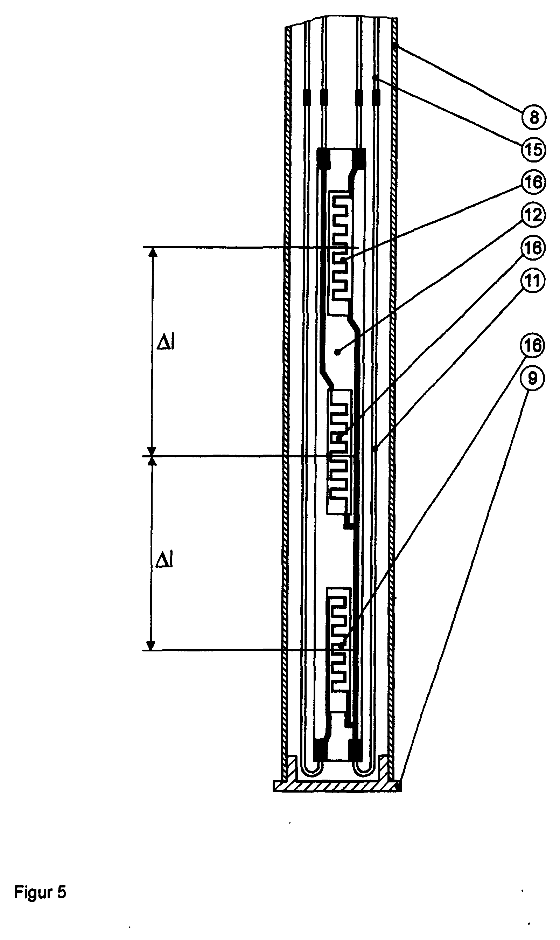

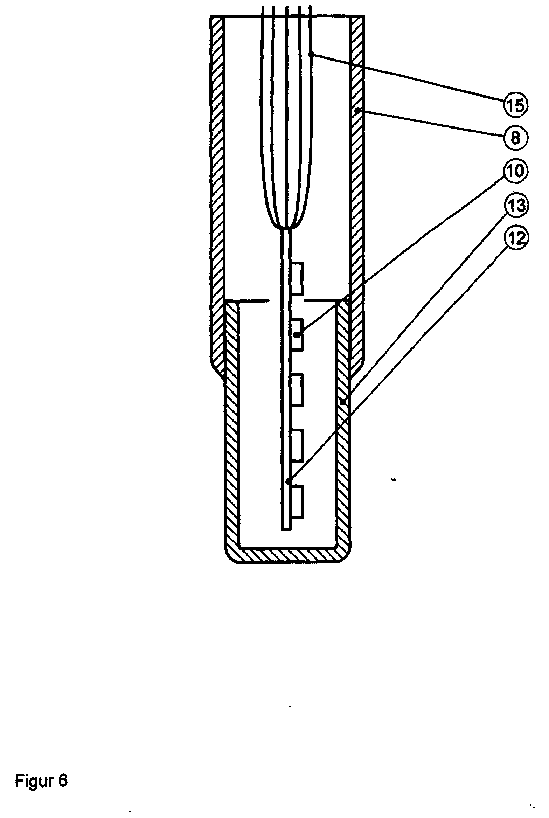

Weitere Ausführungsformen für äquidistante Sensorabstände sind in den Figuren 5 und 6 dargestellt.

In Figur 5 ist eine Ausführung dargestellt, bei der die Sensoren 10 in einem Sensortriplet angeordnet sind.

Der Meßeinsatz 8 ist im unteren Bereich mit einem Meßeinsatzboden 9 aus Silber versehen. Die Sensoren 10 sind auf einer Substratunterlage 12 im Abstand $^\Delta 1$ angebracht und untereinander verschaltet. Die Sensoranschlüsse 11 werden mit Hilfe der Innenleitungen 15 an die hier nicht dargestellte elektronische Baueinheit 21 geführt. Mit Hilfe üblicher Laserzuschnitt- bzw. Lasertrimmmeinrichtungen können jeweils gleiche Abstände der Platin-Widerstands-Sensoren untereinander und eine gleiche Temperaturcharakteristik erreicht werden.

Außer für den gesondert zu betrachtenden Wärmeübergang für den am Boden angebrachten Sensor sind hierbei die Forderungen nach einheitlichen $^\alpha$- und $^\lambda$-Werten für die weiteren Sensoren exakt erfüllt.

In Figur 6 ist eine Anordnung dargestellt, bei der auf der Substratunterlage 12 eine multiple Sensorkombination aus fünf Einzelsensoren 10 angeordnet ist. Die Sensorkombination ist im unteren Bereich des Meßeinsatzes 8 angebracht, der dort zur Erhöhung der thermischen Leitfähigkeit mit einem Silberrohr 13 versehen ist.

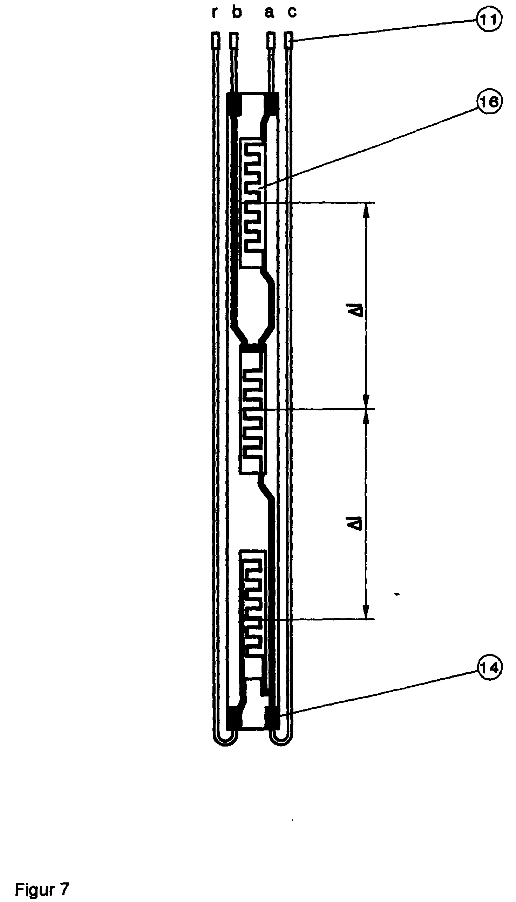

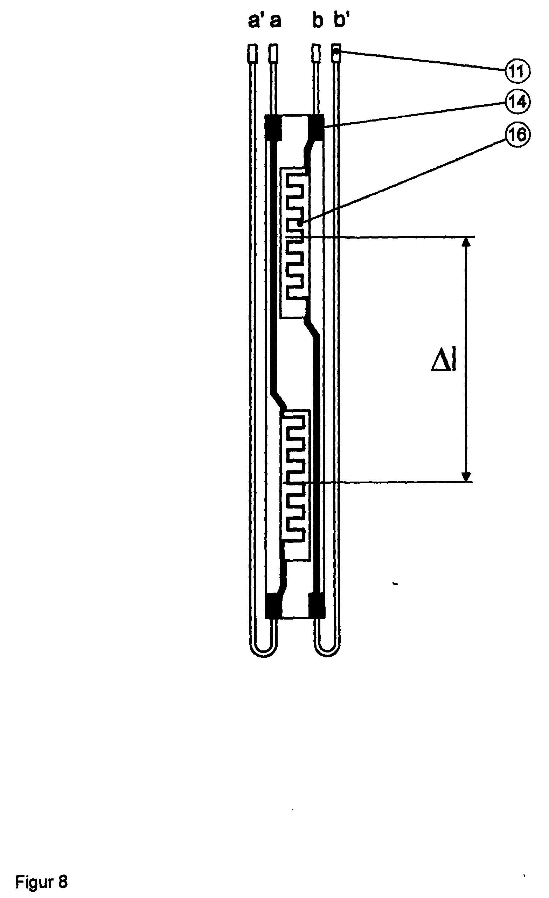

Die Figuren 7 und 8 zeigten Beispiele für ein Sensor-Triplet und ein Sensor-Douplet. Dabei sind jeweils am unteren und oberen Ende des Kramiksubstrats Bondstellen 14 für die Sensoranschlüsse 11 angebracht. Im Fall des in Figur 7 dargestellten Sensor-Triplets werden die Sensoranschlüsse 11 zu den Kontaktstellen a, b und c sowie zu dem gemeinsamen Rückleiter r und im Fall des in Figur 8 dargestellten Sensor-Douplets zu den Kontaktstelen a, a', und b, b' geführt.

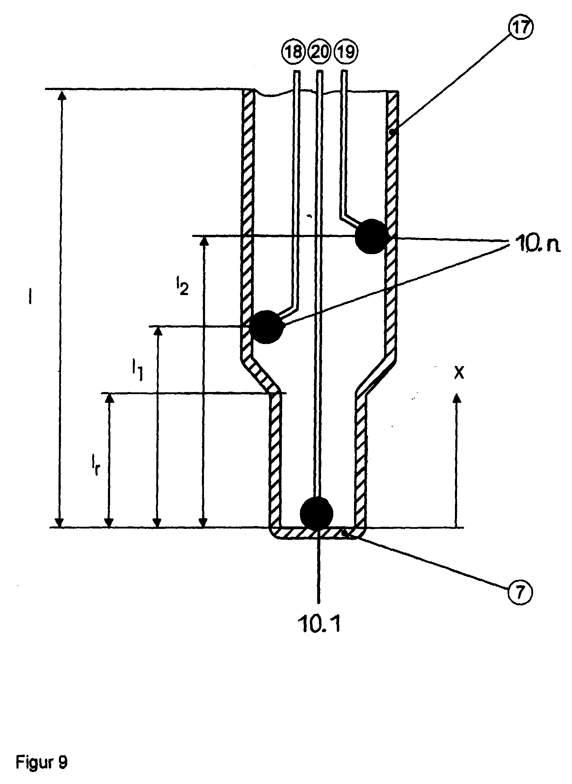

Figur 9 zeigt ein Beispiel, bei dem die Sensoren 10 in drei unterschiedlichen Zonen positioniert sind, dabei befindet sich der Sensor 10.1 am Schutzrohrboden 7, während die beiden weiteren Sensoren 10.n im Abstand $l_1$ und $l_2$ in einem Bereich 17 mit größerem Schutzrohrduchmesser angebracht sind. Die Anordnung weist verschiedene Meßeinsätze auf, wobei ein Meßeinsatz 18 mit Seitenkontakt am Verjüngungsteil, ein Meßeinsatz 19 mit Seitenkontakt am Mittelteil und ein Meßeinsatz 20 mit Bodenkontakt angeordnet ist.

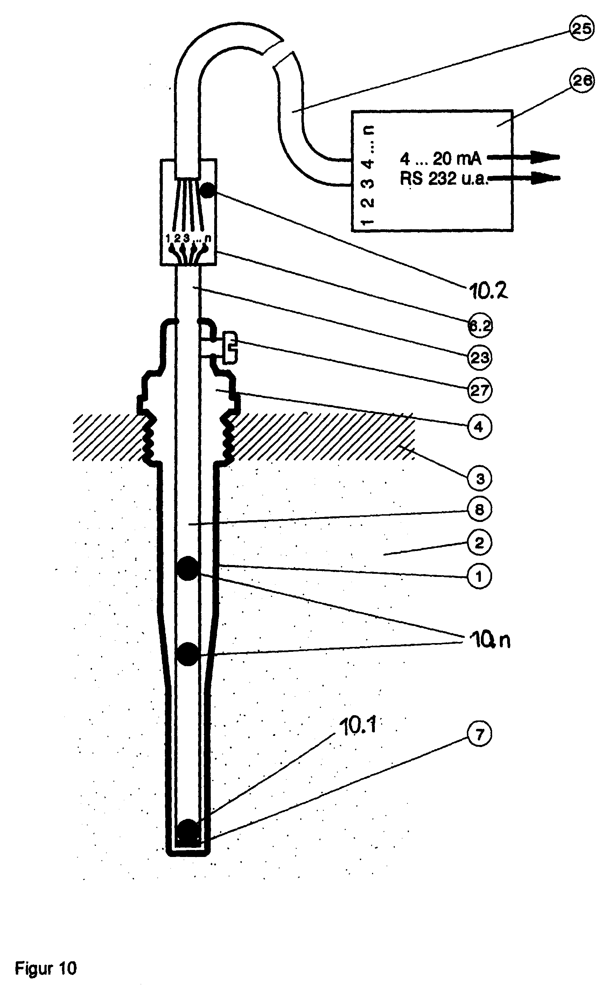

In Figur 10 ist ein Temperaturmeßfühler dargestellt, bei dem sich ein Kabelmeßeinsatz im Schutzrohr 1 befindet. Die Sensoren 10.1 und 10.n sind im Vorderteil des Kabels positioniert. Ein weiterer Sensor 10.2 befindet sich in der Anschlußhülse, in der die Innenleitungen mit dem mehradrigen Anschlußkabel 25 verbunden sind. Das Anschlußkabel 25 führt zur elektronischen Einheit 21, die vom Fühler getrennt in einem separaten Gehäuseteil 26 angeordnet ist.

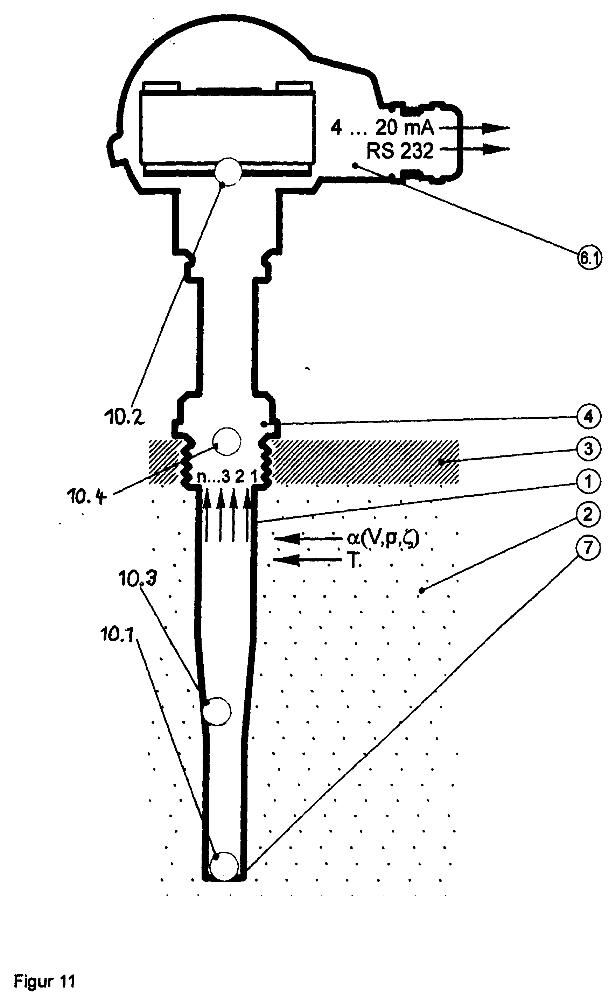

Figur 11 stellt einen Einbaufühler dar, bei dem die Sensoren 10.1 bis 10.3 direkt im Schutzrohr 1, ohne einen auswechselbaren Meßeinsatz, angeordnet sind.

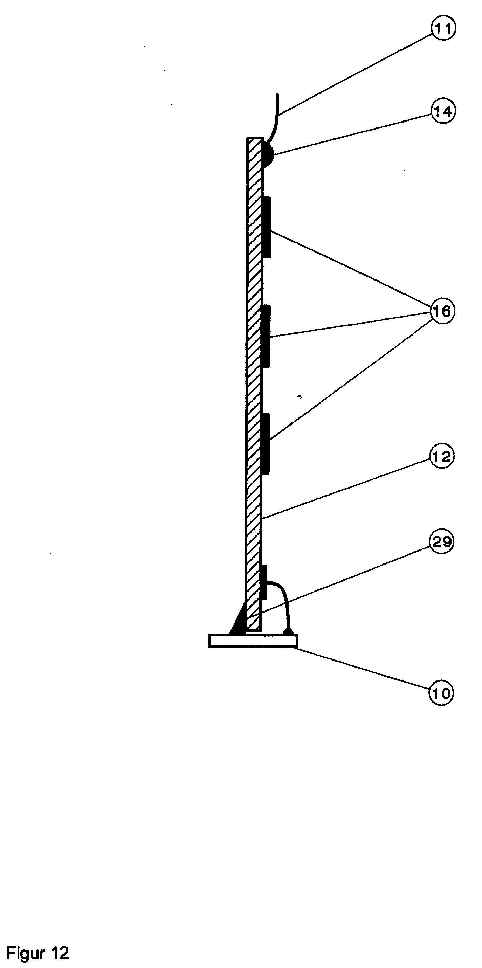

Figur 12 zeigt einen Multiset-Sensor, dessen an der untersten Stelle angeordneter Sensor 10 quer zur Langsachse des Keramiksubstrates 12 mit einer Kittverbindung 29 angeordnet ist. An dem Keramiksubstrat 12 befinden sich die Widerstandsstrukturen 16 und die Bondstelle 14 für den Sensoranschluß 11.

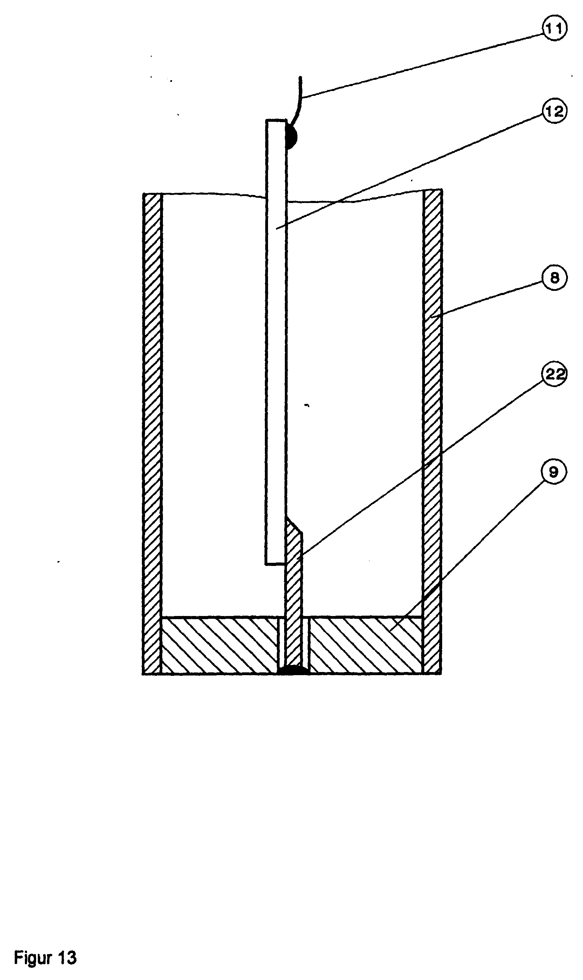

In Figur 13 ist eine Ausführungsform dargestellt, bei der zur vorteilhaften Wärmeübertragung ein Wärmeleitdraht 22 angebracht ist, der mit dem Meßeinsatzboden 9 und dem Keramiksubstrat 12 verbunden ist.

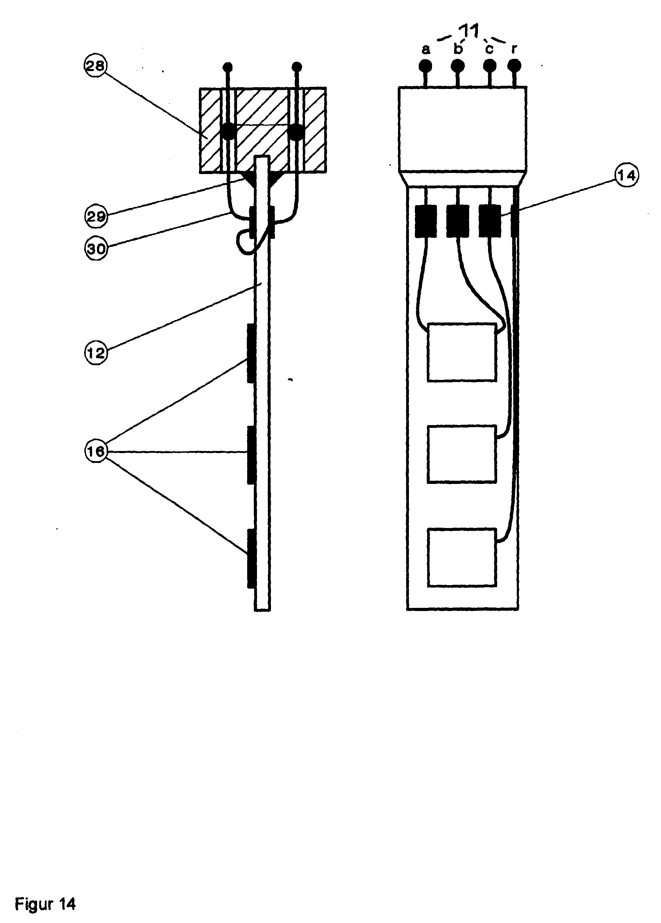

Eine weitere Gestaltungsmöglichkeit für den Multiset-Sensor erläutert Figur 14 in zwei Ansichten. Hierbei ist am Keramiksubstrat 12 ein keramisches Übergangsstück 28 mittels einer Kittstelle 29 verbunden. Zwischen dem Keramiksubstrat 12 und dem keramischen Übergangsstück 28 verlaufen dünne Anschlußdrähte 30, die im keramischen Übergangsstück 28 mit den Sensoranschlußdrähten 11 verbunden sind.

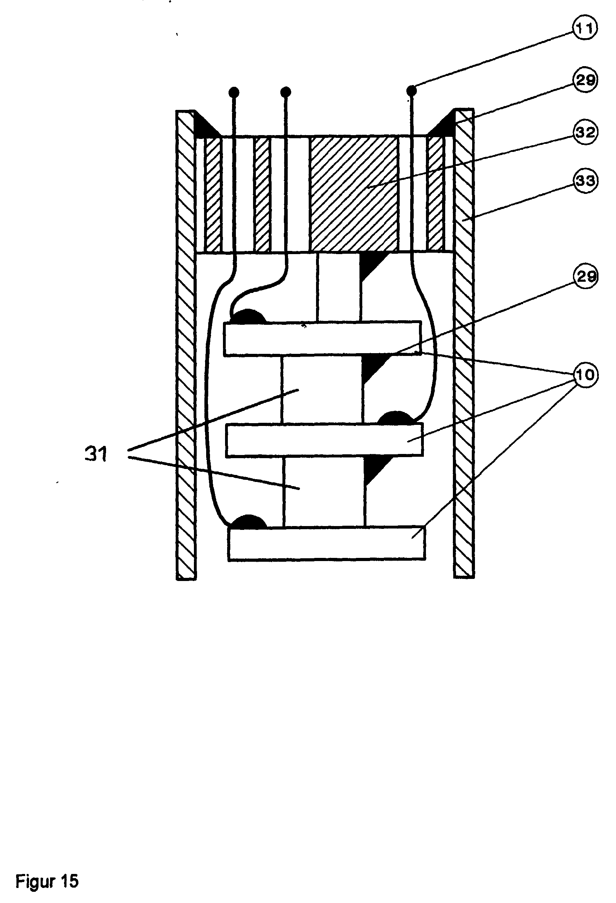

In Figur 15 ist eine Anordnung dargestellt, bei der drei diskrete Sensoren 10 in einem Hüllrohr 33 in Sandwich-Bauweise übereinander angeordnet und an Kittstellen 29 befestigt sind. Zwischen den Sensoren 10 sind Distanzstücke 31 positioniert. Die Anschlußdrähte sind in einem mit Kitt 29 am Hüllrohr 33 befestigten Kapillarstück 32 geführt.

Für die Ermittlung der exakten Messwerte können zwei Auswerteverfahren angewendet werden, das Wärmeübergangs-Erkennungs-Verfahren und das direkte Auswerteverfahren, wobei insbesondere das Differenzen-Quotionten-Verfahren geeignet ist.

Beim Wärmeübergangs-Erkennungs-Verfahren werden relevante Temperaturdifferenzen zwischen den einzelnen Sensoren verglichen und unter Zuhilfenahme von Korrekturtabellen ausgewertet. Es wird in den folgenden vier Verfahrensschritten ausgeführt:

1. Schritt: Parametrierung der geometrischen und der Materialkennwerte das Schutzrohrs. Hierzu gehören insbesondere die materialbedingten Kennwerte des Schutzrohrs, dessen Einbaulänge sowie der Schutzrohrbauart.

2. Schritt: Messung der Sensortemperaturen an den jeweiligen Sensoranordnungspunkten im Schutzrohr.

3. Schritt: Ermittlung codierter Sensorkorrekturen im internen Mikrorechner mit Hilfe von Codetabellen, gegebenenfalls mit Fuzzy-controlle.

4. Schritt: Bildung des korrigierten Meßwertes aus den gemessenen Werten und dem ermittelten Korrekturwert.

Normalerweise besteht dabei für jedes Thermometer ein direkt zuordenbarer $\alpha$-Wert für die jeweilige Meßsituation. Bei idealen Thermometern gilt dies auch für eine ganze Typengruppe. Infolge von technologisch bedingten Toleranzen treten innerhalb einer Typengruppe Differenzen auf. Mit einer zusätzlichen Meßinformation bzw. weiteren Meßwerten und/oder durch Fuzzy-Logik ist diese Unschärfe jedoch beherrschbar.

Beim direkten Auswerteverfahren wird der exakte Meßwert mit Hilfe mathematischer Beziehungen ermittelt. Dieses Auswerteverfahren ist besonders geeignet bei Meßfühlern mit äquidistanen Sensorabständen, für die in den Figuren 3 und 5 Beispiele angegeben sind.
Bei diesen Ausführungen lassen sich mit Hilfe der Temperaturdifferenz zwischen den Sensoren an der Schutzrohrspitze, bezogen auf die Temperaturdifferenz zwischen Wandung und Rohrboden unter Berücksichtigung der fühlerspezifischen Kenngrößen die erforderlichen Kennwerte bestimmen. Dabei hat die Meßstelle am Boden besondere Bedeutung, insbesondere in Fällen, bei denen Wärmezu- oder Wärmeabfuhreinflüsse zu beachten sind.

Bei drei im unteren Schutzrohrteil positionierten Sensoren 10 mit äquidistanten Abständen ergibt sich die wahre Temperatur T aus den drei Temperatursensorsignalen $T_{S1}$, $T_{S2}$, $T_{S3}$ wie folgt über

a) Differenzenbildungen $T_{S1} - T_{S2} = \Delta T_{12}$ und
$T_{S1} - T_{S3} = \Delta T_{31}$
und
b) Quotientenbildung

$$V_{32} = \Delta T_{13} / \Delta T_{12}$$

sowie der
Einordnung in folgende Beziehung

$$T = T_{S1} - \frac{K \Delta T_{12}}{0,5(4 - V_{32}/K)}$$

wobei K ein vorrichtungsspezifischer Korrekturfaktor ist.

Bei den in den Figuren 4 und 9 dargestellten Beispielen sind die Sensoren in vier unterschiedlichen Zonen positioniert. Mit Hilfe von speziellen mathematischen Beziehungen lassen sich hierfür ebenfalls aus den Temperaturdifferenzen der Sensoren die wahren Medientemperaturen errechnen.

Mit dem direkten Berechnungsverfahrens ist es auch möglich, Kennwertgruppen zu berechnen, die für das oben beschriebene Wärmeübergangs-Erkennungs-Verfahren verwendet werden können. Es ist aber auch möglich, diese Kennwertgruppen experimentell zu bestimmen.

**BEZUGSZEICHENLISTE**

| | |
|---|---|
| 1 | Schutzrohr |
| 2 | Medium |
| 3 | Rohrleitung |
| 4 | mechanischer Prozeßanschluß |
| 5 | Halsrohr |
| 6 | elektrisches Anschlußteil |
| 6.1 | Anschlußkopf |
| 6.2 | Anschlußhülse für Kabel |
| 7 | Schutzrohrboden |
| 8 | Meßeinsatz |
| 9 | Meßeinsatzboden |
| 10 | Sensor |
| 11 | Sensoranschluß |
| 12 | Keramiksubstrat |
| 13 | Silberrohr |
| 14 | Bondstelle |
| 15 | Innenleitung |
| 16 | Widerstandsstrukturen |
| 17 | Schutzrohr mit unterschiedlichen Durchmessern |
| 18 | Meßeinsatz mit Seitenkontakt am Verjüngungsteil |
| 19 | Meßeinsatz mit Seitenkontakt am Mittelteil |
| 20 | Meßeinsatz mit Bodenkontakt |
| 21 | elektronische Baueinheit |
| 22 | Silberleitdraht |
| 23 | Kabelmeßeinsatz |
| 24 | Füllstoff |
| 25 | Anschlußkabel |
| 26 | separates Gehäuseteil |
| 27 | Einspannstelle des Kabelmeßeinsatzes |
| 28 | keramisches Übergangsstück |
| 29 | Kitt |
| 30 | dünner Anschlußdraht |
| 31 | keramisches Distanzstück |
| 32 | Kapillarstück |
| 33 | Hüllrohr |
| $t_a$ | Außentemperatur |
| $t_R$ | Rohrwandtemperatur |
| $t_W$ | Wurzeltemperatur |
| $t_U$ | Umgebungstemperatur |
| $t_B$ | Bodentemperatur |
| $t_M$ | Mediumtemperatur |
| l | Länge des Schutzrohres |
| x | Längenkoordinate |
| s | Schutzrohrwandstärke |
| $d_A$ | Außendurchmesser des Schutzrohrs |
| $d_i$ | Innendurchmesser des Schutzrohrs |
| R | Sensorabstand |
| a,b,c | Sensoranschluß |
| r | gemeinsamer Rückleiter |
| F | Wärmefluß |
| | Wärmeübergangsbeiwert |
| | Wärmeleitfähigkeitsbeiwert |

**Patentansprüche**

1. Verfahren zur Medientemperaturerfassung mit Einbautemperaturfühlern, bei dem mit in einem Schutzrohr (1) angeordneten Sensoren (10) die Temperatur gemessen und die zugehörigen Meßwertsignale über ein elektrisches Anschlußteil (6) nach außen geführt werden, **dadurch gekennzeichnet**, daß die Temperatur an mehreren Meßstellen jeweils mit einzelnen Sensoren (10) im Schutzrohr (1) des Thermometers ermittelt wird, wobei die einzelnen Sensoren (10) definierte Wärmeübergangs- und/oder Wärmeleitcharakteristik aufweisen, und die Messwerte einzeln zu einer im Temperaturfühler enthaltenen elektronischen Auswerteeinheit (21) geführt werden, in der aus den einzelnen Meßwerten unter Berücksichtigung der Warmeübergangs- und/oder Wärmeleitcharakteristik zum Medium (2) der wahre Temperaturwert ermittelt wird.

2. Verfahren nach Anspruch 1, **dadurch gekennzeichnet**, daß vor der Erstmessung eine Parametrierung der elektronischen Auswerteeinheit (21) durch Eingabe der Meßfühlergrößen Einbaulänge, Schutzrohrtyp und Schutzrohrmaterial sowie des Meßbereichs erfolgt.

3. Verfahren nach Anspruch 1 oder 2, **dadurch gekennzeichnet**, daß aus den mit Hilfe der im Schutzrohr und am Schutzrohrboden angeordneten Temperatursensoren erfassten Temperaturwerten, am Fühleranschlußkopf sowie gegebenenfalls weiteren Temperaturwerten Temperaturdifferenzsignale gebildet werden und daß das Signals des unmittelbar am Schutzrohrboden (7) angeordneten Sensors (10.1), in Abhängigkeit von der Parametrierung und der Differenzwertgruppen nach einem Codiertabellenverfahren oder nach einem direkten mathematischen Berechnungsverfahren korrigiert wird.

4. Verfahren nach einem der Ansprüche 1 bis 3, **dadurch gekennzeichnet**, daß eine Differenzbildung der Temperaturmeßwerte gemäß $\Delta T_{12} = T_{S1} - T_{S2}$ und $\Delta T_{13} = T_{S1} - T_{S3}$ sowie ein Quotientenbildung $V_{32}$ gemäß $V_{32} = \Delta T_{31} / AT_{21}$ durchgeführt und aus Verknüpfungen von $T_{S1}$, $\Delta T_{S2}$ $\Delta T_{S3}$ sowie $V_{32}$ kombiniert mit einem konstruktionsspezifischen Korrekturfaktor K die wahre Temperatur ermittelt wird.

5. Verfahren nach einem der Ansprüche 1 bis 4, **dadurch gekennzeichnet**, daß aus den Temperaturdifferenzwerten eine Korrektur des Temperaturmeßwertes des Bodensensors erfolgt und gleichzeitig ein Statussignal zum Zustand des Sensors und ein Signal zur Prozeßdiagnose ermittelt wird.

6. Temperaturfühler zur Durchführung des Verfahrens nach einem der Ansprüche 1 bis 4, bei dem in einem Schutzrohr (1) mindestens drei Temperatursensoren (10) angeordnet sind und das Schutzrohr (1) mit einem elektrischen Anschlußteil (6) verbunden ist, **dadurch gekennzeichnet**, daß in dem elektrischen Anschlußteil (6) eine elektronische Baueinheit (21) angeordnet ist, die einen Mikroprozessor enthält und die mindestens drei Eingänge aufweist, welche jeweils mit einem Sensor (10) verbunden sind und daß mindestens zwei Sensoren so angeordnet sind, daß sich unterschiedliche Wärmeübergangswiderstände zum Prozeßmedium ergeben.

7. Temperaturfühler nach Anspruch 6, **dadurch gekennzeichnet**, daß einer der Sensoren (10.1) am Schutzrohrboden (7) und ein zusätzlicher Sensor (10.2) in unmittelbarer Nähe der elektronischen Baueinheit (21) angeordnet ist.

8. Temperaturfühler nach Anspruch 7, **dadurch gekennzeichnet**, daß zwischen dem Sensor (10.1) am Schutzrohrboden (7) und dem in der Nähe der elektronischen Baueinheit (21) angebrachten zusätzlichem Sensor (10.2) weitere Sensoren im Schutzrohr (1) so angeordnet sind, daß benachbarte Sensoren (10) jeweils den gleichen Abstand voneinander aufweisen und daß sich für die weiteren Sensoren (10.n) gleiche Warmeübergangswiderstände ergeben.

9. Temperaturfühler nach Anspruch 7, **dadurch gekennzeichnet**, daß sich für die zwischen dem Sensor (10.1) am Schutzrohrboden (7) und dem Sensor (10.2) in der Nähe der elektronischen Baueinheit (21) angebrachten weiteren Sensoren (10.n) unterschiedliche Wärmeübergangswiderstände ergeben und die Abstände benachbarter Sensoren (10) einen rationalen Bruchteil der geometrischen Einbaulänge im Schutzrohr (1) betragen.

10. Temperaturfühler nach einem der vorhergehenden Ansprüche, **dadurch gekennzeichnet**, daß das Schutzrohr (1) Bereiche mit unterschiedlicher Wärmeleitfähigkeit aufweist.

11. Temperaturfühler nach einem der vorhergehenden Ansprüche, **dadurch gekennzeichnet**, daß mindestens zwei Sensoren (10) zu einem Multisetsensor zusammengefaßt sind, der auf einem Keramiksubstrat (12) angebracht ist und daß sowohl oberhalb als auch unterhalb des Keramiksubstrates (12) Anschlüsse angebondet sind und die unteren Anschlüsse rückseitig zu den oberen geführt und fixiert sind.

**12.** Temperaturfühler nach einem der vorhergehenden Ansprüche, **dadurch gekennzeichnet**, daß die elektrischen Verbindungen (11) der Sensoren (10) mit der elektronischen Baueinheit (21) über einen verketteten Zweileiteranschluß mit gemeinsamen Strompfad erfolgt und daß in die Verbindung eine Polwendeeinrichtung eingeschaltet ist.

**13.** Temperaturfühler nach Anspruch 11 oder 12, **dadurch gekennzeichnet**, daß mindestens zwei Sensoren (10) zu einem Multisetsensor zusammengefaßt sind, bei dem Dünn- oder Dickfilmsensoren (10) auf einem Keramiksubstrat (12) aufgekittet sind oder das Keramiksubstrat (12) selbst direkter Träger eines Widerstandsdünn- oder -dickfilmes (16) ist und daß mit dünnen Anschlußdrähten, die einen Durchmesser von weniger als 0,1 mm aufweise, ein einseitiger Mehrleiteranschluß erfolgt und daß in einem keramischen Übergangsstück (28) die dünnen Anschlußdrähte der Multiset-Anordnung zu einer stärkeren Innenleitung (15) geführt werden.

Figur 1

4 ... 20 mA

RS 232

n ... 3 2 1

10.2

6

21

8

5

4

3

1

2

7

$\alpha(V,p,\zeta)$

T

n...3 2 1

10.n

10.1

Figur 2

Figur 3

Figur 4

Figur 5

Figur 6

Figur 7

Figur 8

⑱⑳⑲

⑰

10.n

l₂

l

l₁

x

lᵣ

⑦

10.1

Figur 9

4 ... 20 mA
RS 232 u.a.

25

26

10.2

6.2

23

27

4

3

8

2

1

10.n

10.1

7

Figur 10

4 ... 20 mA
RS 232

6.1

10.2

4

3

10.4

n...3 2 1

1

2

$\alpha(V,p,\zeta)$

T.

7

10.3

10.1

Figur 11

**Figur 12**

Figur 13

Figur 14

Figur 15